# EUROPÄISCHE PATENTANMELDUNG

(11) **EP 2 698 461 A1**
(43) Veröffentlichungstag der Anmeldung: **19.02.2014**
(21) Anmeldenummer: 12180340.7
(22) Anmeldetag: 13.08.2012
(51) Int. Cl.: D04H 1/04, A01G 1/00, A01G 13/02

(54) **Verfahren zur Aufzucht von Rasen**

(71) Anmelder: Schwab Impulse GmbH & Co. KG, 86579 Waidhofen (DE)
(72) Erfinder: Die Erfindernennung liegt noch nicht vor
(74) Vertreter: Bettinger Schneider Schramm

(57) **Zusammenfassung**

Bereit gestellt wird ein Verfahren zur Aufzucht von Rasen, insbesondere Rollrasen, wobei nach dem Ausbringen des Rasensaatgutes der Rasenboden mit einem im Wesentlichen flächig ausgestalteten, zumindest teilweise lichtdurchlässigem Vlies im Wesentlichen aus Naturfasern abgedeckt wird. Des Weiteren wird ein Vlies, insbesondere zur Verwendung in einem erfindungsgemäßen Verfahren bereit gestellt, welches im Wesentlichen flächig ausgestaltet ist, im Wesentlichen Naturfasern aufweist und vorzugsweise zumindest teilweise lichtdurchlässig ausgestaltet ist.

## Beschreibung

### Gebiet der Erfindung

Die Erfindung betrifft ein Verfahren zur Aufzucht von Rasen, insbesondere Rollrasen sowie ein Vlies zur Aufzucht von Rasen, insbesondere zur Verwendung in einem erfindungsgemäßen Verfahren zur Aufzucht von Rasen.

### Hintergrund der Erfindung und Stand der Technik

Bei der Herstellung von Grünflächen bzw. Rasen wird das ausgebrachte Rasensaatgut verteilt und in die obere Bodenschicht leicht eingearbeitet, wobei das Saatgut größtenteils an der Oberfläche sichtbar bleiben sollte, da das Saatgut zur Keimung Licht benötigt. Weil das Rasensaatgut nach der Aussaat sehr empfindlich ist und weil in der ersten Wachstumsphase die Wurzelsysteme noch nicht vollständig entwickelt sind, sollte eine regelmäßige Wasserversorgung gewährleistet werden, um ein Austrocknen des Saatgutes während der Keimung zu verhindern. Insbesondere bei Trockenheit sollte die Fläche mit Wasser versorgt werden, was einen erheblichen Wasserverbrauch bedeuten kann und insbesondere bei der industriellen Herstellung von Rasen bzw. Rollrasen erhebliche Mehrkosten verursachen kann.

Das herkömmliche Verfahren zur Herstellung einer Rasenfläche, wie vorstehend beschrieben, hat zudem den Nachteil, dass keine gleichmäßige Keimung garantiert werden kann und es zu einer ungleichmäßigen Keimrate, insbesondere bei Trockenheit, kommen kann. Insbesondere bei der Herstellung von Rollrasen ist eine gleichmäßige Keimrate unerlässlich, um ein gleichmäßiges Bild der einzelnen Grassoden bzw. der einzelnen Rasenrollen zu gewährleisten sowie eine starke Verunkrautung zu verhindern.

Ein weiterer Nachteil besteht darin, dass das Saatgut vor dem Verzehr durch Vögeln und vor dem Abtragen durch Wind, insbesondere bei Trockenheit, nicht geschützt ist, was ebenfalls zu einem uneinheitlichen Erscheinungsbild des Rasens führen kann.

### Aufgabe der Erfindung

Aufgabe der Erfindung ist es daher, Lösungen bereitzustellen, die die aus dem Stand der Technik bekannten Nachteile zumindest teilweise vermeiden und welche insbesondere eine gleichmäßige und bessere Entwicklung des Rasens gewährleisten.

### Erfindungsgemäße Lösung

Diese Aufgabe wird erfindungsgemäß durch ein Verfahren zur Aufzucht von Rasen, insbesondere Rollrasen sowie durch ein lichtdurchlässiges Vlies aus natürlichen Materialien nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Verfahren zur Aufzucht von Rasen, insbesondere Rollrasen, wobei nach dem Ausbringen des Rasensaatgutes der Boden bzw. der Rasenboden mit einem im Wesentlichen flächig ausgestalteten Vlies abgedeckt wird. Es hat sich als vorteilhaft herausgestellt, wenn das Vlies zumindest teilweise lichtdurchlässig ausgestaltet ist.

Das auf dem Rasenboden aufgebrachte Vlies hat den Vorteil, dass das Rasensaatgut vor Witterungseinflüssen, etwa Hitze, Kälte oder Trockenheit, besser geschützt ist. Weil der Rasenboden bzw. das Saatgut nicht mehr der direkten Sonneneinstrahlung (das Vlies ist hierbei so ausgestaltet, dass es dennoch lichtdurchlässig ist) und dem Wind ausgesetzt ist, ist einerseits ein sehr guter Verdunstungsschutz gegeben und andererseits das Saatgut vor dem Abtragen durch Wind geschützt. Ferner schützt das Vlies das Saatgut vor dem Verzehr durch Vögel und reduziert bodenbürtiges Verunkrauten der Fläche.

Durch den verbesserten Verdunstungsschutz ist eine Verringerung des Bewässerungsaufwandes möglich. Insbesondere schützt das Vlies die darunterliegende Erdschicht bzw. den Rasenboden vor Austrocknung. Ferner schafft das Vlies am Rasenboden bzw. unter dem Rasen ein günstiges Kleinklima bzw. Mikroklima, was wiederum der Austrocknung und dem Windabtrag vorbeugt und welches sich günstig auf die Keimrate des Rasensaatgutes auswirkt. Die so erzielte bessere und gleichmäßigere Keimrate gewährleistet ein gleichmäßiges Erscheinungsbild des Rasens selbst bei sehr großen Anbauflächen und verbessert die Bodenbiologie, reduziert Stress für den Samen und Mikroorganismen, wirkt sich positiv auf das Porengefüge des Bodens aus und schafft ein optimales Kleinklima in Saathorizont.

Es hat sich als vorteilhaft herausgestellt, wenn das Vlies Schafwolle aufweist bzw. aus Schafwolle hergestellt ist. Versuche haben gezeigt, dass Schafwolle im Vergleich zu anderen Naturprodukten, etwa Jutegewebe oder Kokosfasern, die mehrfache Menge ihres Eigengewichtes an Wasser aufnehmen und speichern kann und gleichzeitig eine ausreichende Lichtdurchlässigkeit aufweist. Die hohe Wasserspeicherfähigkeit des Schafwollvlieses ermöglicht es, den Bewässerungsaufwand und den damit verbundenen Wasserverbrauch weiter zu reduzieren. Ferner kann dadurch eine noch bessere Keimung und eine gleichmäßigere Keimrate des Rasensaatgutes erreicht werden.

Des Weiteren hat sich als vorteilhaft herausgestellt, wenn in das Vlies eine Armierung eingearbeitet ist, wobei die Armierung Jutefasern umfassen kann.

Dadurch wird dem Vlies eine gewisse Stabilität verliehen, was einerseits das Aufbringen des Vlieses auf den Rasenboden erleichtert und andererseits ein weitgehend faltenfreies Abdecken des Rasenbodens ermöglicht.

Als vorteilhaft hat sich ein Vlies mit einem Gewicht zwischen 10 g/m² und 300 g/m² herausgestellt. Vorzugsweise weist das Vlies ein Gewicht zwischen 10 g/m² und 150 g/m², besonders bevorzugt zwischen 50 g/m² und 75 g/m² auf.

Das Vlies weist über die gesamte Fläche etwa die gleiche Stärke auf. Damit ist auf der gesamten Rasenfläche, die mit einem Vlies abgedeckt ist, eine gleichmäßige Entwicklung des Rasens gewährleistet.

Ferner ist das Vlies so ausgestaltet, dass es zumindest teilweise lichtdurchlässig ist, damit genügend Licht an das Rasensaatgut gelangen kann, das für die Keimung des Rasensamens notwendig ist. Die Lichtdurchlässigkeit und/oder das Gewicht des Vlies kann in Abhängigkeit von dem verwendeten Rasensaatgut bzw. von den verwendeten Saatgutsorten abhängig gemacht werden, sodass je nach Rasensorte ein Vlies mit einer entsprechend vorteilhaften Wasserspeicherfähigkeit und mit einer entsprechend vorteilhaften Lichtdurchlässigkeit auf den Rasenboden aufgebracht werden kann.

In einer weiteren Ausgestaltung der Erfindung kann in das Vlies ein Düngemittel, vorzugsweise ein Rasen-Langzeitdünger eingearbeitet sein.

Die Verwendung eines Vlies, insbesondere eines Schafwollvlies zum Abdecken des Rasensaatgutes bzw. des Rasenbodens hat zudem den Vorteil, dass das Vlies spätestens nach sechs bis sieben Monaten (je nach Witterungsbedingungen auch früher) zu verrotten beginnt, wobei das Vlies Nährstoffe, insbesondere Stickstoff und andere Nährstoffe an das darunterliegende Rasensaatgut bzw. an den Rasen abgibt. Damit kann eine verbesserte Nährstoffversorgung des Rasens erreicht werden. Zudem kann der Einsatz von Düngemittel reduziert werden. Tests haben ergeben, dass bei Verwendung eines Schafwollvlies selbst ohne eingearbeiteten Langzeitdünger der Düngemittelverbrauch bei gleichbleibender Rasenqualität um bis zu 50% und mehr reduziert werden kann. Weil das Schafwollvlies erst mit Beginn der Verrottung Nährstoffe an das Gras bzw. an das Rasensaatgut abgibt, kann mit dem in das Vlies eingearbeiteten Langzeitdünger eine Nährstoffversorgung durch das Vlies für den Zeitraum zwischen der Rasenaussaat und dem Beginn der Verrottung des Vlies ermöglicht werden. Damit kann der Düngemittelverbrauch nochmals reduziert werden. Insbesondere kann der Aufwand für das zusätzliche Ausbringen von Düngemittel reduziert werden.

Vorteilhaft ist es, wenn der Rasenboden mit dem Vlies derart abgedeckt wird, dass das Vlies vollflächig im Wesentlichen bündig auf dem Rasenboden aufliegt.

Das Vlies kann an vorbestimmten Stellen mit Befestigungsmittel im Rasenboden verankert werden. Damit wird gewährleistet dass das Vlies auch bei stärkerem Wind auf dem Boden bleibt. Vorteilhaft ist es hierbei, wenn die Befestigungsmittel verrottbar bzw. biologisch abbaubar sind, sodass sie in dem Boden verbleiben können.

Weil das Vlies eine bessere Entwicklung des Rasens ermöglicht, ist auch ein früheres Ernten des Rollrasens möglich.

Ferner wird durch die Erfindung ein Vlies, insbesondere zur Verwendung in einem erfindungsgemäßen Verfahren zur Aufzucht von Rasen, insbesondere Rollrasen, bereitgestellt, welches im Wesentlichen flächig ausgestaltet ist und im Wesentlichen Naturfasern aufweist.

Die Naturfasern können Schafwolle umfassen.

In das Vlies kann ein Düngemittel, vorzugsweise ein Rasen-Langzeitdünger eingearbeitet sein. Damit wird es in vorteilhafter Weise ermöglicht, dass das Vlies auch vor dem Beginn der Verrottung des Vlieses Nährstoffe an den darunterliegenden Rasenboden bzw. an das Gras abgeben kann.

Vorteilhaft ist es, wenn in das Vlies eine Armierung, vorzugsweise aus Jutefasern eingearbeitet ist, um dem Vlies zusätzliche Stabilität zu verleihen.

Das Vlies kann ein Gewicht zwischen 10 g/m² und 250 g/m², vorzugsweise zwischen 50 g/m² und 75 g/m² aufweisen.

Das Vlies kann zumindest teilweise lichtdurchlässig ausgestaltet sein.

Das Vlies kann eine Dicke zwischen 0,5 cm und 10 cm, vorzugsweise zwischen 2 cm und 5 cm aufweisen.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: ein Rasenboden mit einer Rasenaussaat und einem auf dem Rasenboden aufgebrachten Vlies; und
- Fig. 2: einen Rasenboden bzw. einen Rasen mit einem darauf aufgebrachten Vlies.

### Detaillierte Beschreibung der Erfindung

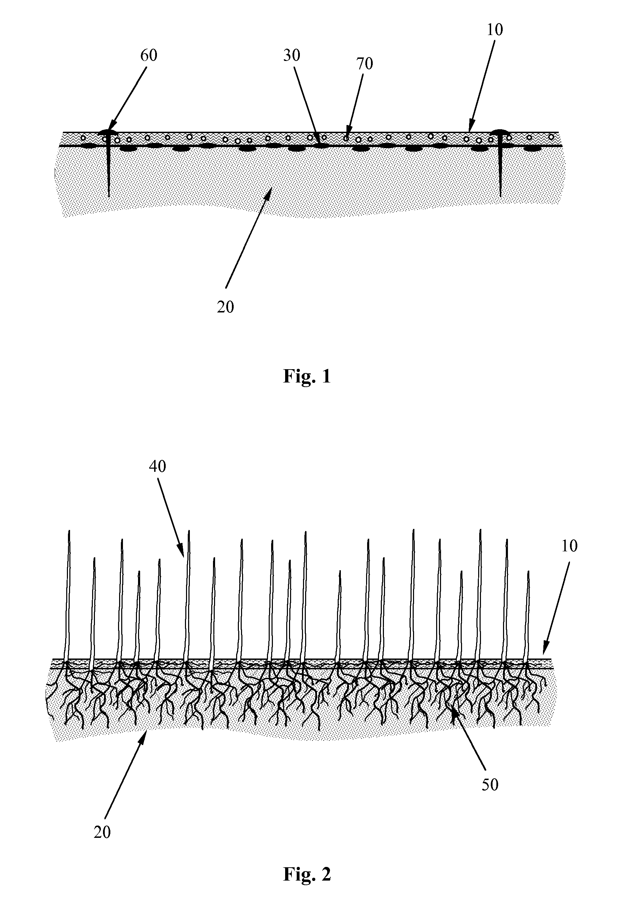

Fig. 1 zeigt einen Rasenboden 20 in einer Schnittansicht, der nach dem erfindungsgemäßen Verfahren zur Aufzucht von Rasen, insbesondere Rollrasen, hergestellt worden ist.

Auf den Rasenboden 20, der in an sich bekannter Weise für eine Rasenaufzucht vorbereitet worden ist, wird zunächst in ebenfalls an sich bekannter Weise das Rasensaatgut 30 aufgebracht. Anschließend wird das Rasensaatgut 30 bzw. der Rasenboden 20 mit einem erfindungsgemäßen Vlies 10 abgedeckt, sodass das Vlies vollflächig im Wesentlichen bündig auf dem Rasenboden 20 aufliegt.

Als Vlies ist hier ein Vlies aus Schafwolle verwendet worden. Schafwolle bzw. ein Schafwollvlies 10 hat sich als besonders geeignet herausgestellt, denn Schafwolle besitzt eine sehr hohe Wasserspeicherfähigkeit und kann eine mehrfache Menge seines Eigengewichtes an Wasser aufnehmen und speichern. Darüber hinaus sind die in der Schafwolle enthaltenen und bei der Verrottung freigesetzten Stoffe besonders zur Düngung geeignet.

Durch das Vlies 10 wird das darunterliegende Rasensaatgut 30 vor Witterungseinflüssen, insbesondere Hitze, Kälte und Trockenheit, geschützt. Das in dem Vlies 10 gespeicherte Wasser wird kontinuierlich an den darunterliegenden Rasenboden 20 bzw. an das darunterliegende Rasensaatgut 30 abgegeben und ermöglicht dadurch ein sicheres Keimen sowie eine gleichmäßige Keimrate des Saatgutes 30. Ferner kann durch die hohe Wasserspeicherfähigkeit des Schafwollvlieses 20 der Bewässerungsaufwand bzw. die für die Bewässerung benötigte Wassermenge erheblich reduziert werden. Das Schafwollvlies 20 verhindert zudem, dass das Rasensaatgut 30 durch Wind abgetragen wird oder von Vögeln verzehrt wird.

Das Schafwollvlies 10 ist so ausgestaltet, dass es zumindest teilweise lichtdurchlässig ist, damit das darunterliegende Rasensaatgut mit ausreichend Licht versorgt wird, was für eine optimale Keimung des Rasensaatgutes 30 unabdingbar ist.

Weil das Rasensaatgut 30 von dem Vlies 10 abgedeckt wird kann auf ein Einharken bzw. Einarbeiten des Rasensaatgutes in den Rasenboden 20, wie es bei einem herkömmlichen Aufzuchtverfahren üblich ist, verzichtet werden, sodass der Arbeitsaufwand bei der Rasenaussaat erheblich verringert werden kann.

Das Vlies bzw. das Schafwollvlies 10 kann an einigen Stellen mit Befestigungsmittel 60 im Rasenboden 20 verankert werden, um beispielsweise ein Abtragen des Vlieses 10 bei zu starkem Wind zu verhindern. Die hier gezeigten Befestigungsmittel können jede für eine stabile Befestigung bzw. eine stabile Verankerung des Vlieses in dem Rasenboden geeignete Form aufweisen. Als vorteilhaft hat sich herausgestellt, wenn die Befestigungsmittel 60 aus verrottbarem bzw. biologisch abbaubarem Material sind. Die Befestigungsmittel 60 können so im Rasenboden belassen werden und müssen auch vor der Ernte des Rollrasens nicht entfernt werden.

In das hier gezeigte Vlies bzw. Schafwollvlies 10 ist eine Armierung eingearbeitet, welche hier nicht gezeigt ist. Als besonders geeignet für eine Armierung haben sich Jutefasern erwiesen. Durch die Armierung wird dem Vlies 10 eine gewisse Stabilität verliehen, was ein einfaches Aufbringen des Vlieses auf dem Rasenboden 20 ermöglicht. Ferner wird durch die so erreichte Stabilität eine Faltenbildung beim Ausbringen des Vlieses vermieden, sodass über die gesamte Fläche ein gleichmäßiges Klima bzw. Mikroklima unter dem Vlies sichergestellt ist.

In das hier gezeigte Vlies 10 ist ferner ein Düngemittel 70, vorzugsweise ein Rasen-Langzeitdünger, eingearbeitet. Der Rasen-Langzeitdünger gibt bis zum Beginn der Verrottung des Vlieses 10 seine Nährstoffe an das darunterliegende Rasensaatgut 30 bzw. an den Rasen ab. Nach etwa sechs bis sieben Monaten oder bei entsprechenden Witterungsbedingungen auch früher, beginnt das Schafwollvlies 10 zu verrotten und gibt während der Verrottungsphase Nährstoffe, insbesondere Stickstoff an den Rasen ab.

Durch den in das Vlies eingearbeiteten Langzeit-Rasendünger 70 wird eine gleichmäßige Nährstoffabgabe in dem Zeitraum zwischen der Aussaat des Rasensaatgutes und dem Beginn des Verrottens des Vlieses 10 gewährleistet.

Im Ergebnis kann dadurch der Düngemittelverbrauch sowohl vor der Verrottungsphase des Vlieses 10 als auch während der Verrottungsphase des Vlies 10 verringert werden. Tests haben gezeigt, dass der Düngemittelverbrauch bis zu 50% und mehr reduziert werden kann, ohne Einbußen hinsichtlich der Qualität des Rasens hinnehmen zu müssen.

Fig. 2 zeigt einen nach dem erfindungsgemäßen Verfahren hergestellten Rasen in einer Schnittansicht. Das Vlies bzw. das Schafwollvlies 10 ist hier bereits zum Teil verrottet und der ursprünglich in dem Vlies 10 eingearbeitete Langzeitdünger ist vollständig an den Rasen 40 abgegeben worden.

Während der Keimung können das Gras bzw. die Grashalme durch das Vlies 10 hindurch wachsen, sodass das Vlies 10 nicht von dem Rasenboden 20 entfernt werden muss und auf dem Rasenboden 20 vollständig verrotten kann. Während der Verrottungsphase, wie in Fig. 2 gezeigt, gibt das Vlies 10 Nährstoffe, insbesondere Stickstoff an den darunterliegenden Rasenboden 20 ab. Die Nährstoffe können dann von den Graswurzeln 50 aufgenommen werden können. Das Vlies 10 bzw. das verrottende Vlies 10 wirkt sich zudem positiv auf das Grasnarbenwachstum der Gräser 40 aus, was zu einem stabileren und optisch anspruchsvolleren Rasen führt.

Weil durch das Vlies bzw. Schafwollvlies 10 eine gleichmäßigere und bessere Entwicklung des Rasens ermöglicht wird, kann mit einer Ernte des Rollrasens früher als bisher begonnen werden. Damit kann der Ertrag pro Flächeneinheit gesteigert werden.

Das hier gezeigte Vlies weist ein Gewicht von etwa 50 g/m² und 75 g/m² auf. Das Gewicht pro Flächeneinheit kann aber auch höher sein, wobei allerdings eine ausreichende Lichtdurchlässigkeit des Vlieses gewährleistet sein muss, damit das für die Keimung notwendige Licht an das Rasensaatgut gelangen kann. Bei Rasensorten, welche für die Keimung weniger Licht benötigen, kann das Vlies 10 auch eine geringere Lichtdurchlässigkeit aufweisen, sodass für das Vlies 10 ein größeres Gewicht pro Flächeneinheit gewählt werden kann. Das größere Gewicht pro Flächeneinheit hat den Vorteil, dass sich die Verrottungsdauer verlängert und demzufolge auch über einen längeren Zeitraum Nährstoffe an das Gras abgegeben werden kann.

Das erfindungsgemäße Vlies kann eine Dicke bzw. Stärke zwischen 0,5 cm und 10 cm, vorzugsweise zwischen 2 cm und 5 cm aufweisen.

### Bezugszeichenliste

- 10: Vlies bzw. Schafwollvlies
- 20: Rasenboden
- 30: Rasensaatgut bzw. Rasensamen
- 40: Rasen bzw. Gras
- 50: Wurzeln des Rasens
- 60: Befestigungsmittel zur Verankerung des Vlies in dem Rasenboden
- 70: Düngemittel bzw. Langzeitdünger, welches in das Vlies eingearbeitet ist

## Patentansprüche

1. Verfahren zur Aufzucht von Rasen, insbesondere Rollrasen, wobei nach dem Ausbringen des Rasensaatgutes (30) der Rasenboden (20) mit einem im Wesentlichen flächig ausgestalteten, zumindest teilweise lichtdurchlässigem Vlies (10) im Wesentlichen aus Naturfasern abgedeckt wird.

2. Verfahren nach Anspruch 1, wobei das Vlies (10) Schafwolle aufweist.

3. Verfahren nach einem der vorhergehenden Ansprüche, wobei in das Vlies (10) eine Armierung eingearbeitet ist.

4. Verfahren nach Anspruch 3, wobei die Armierung Jutefasern umfasst.

5. Verfahren nach einem der vorhergehenden Ansprüche, wobei das Vlies (10) ein Gewicht zwischen 10 g/m² und 250 g/m², vorzugsweise zwischen 50 g/m² und 75 g/m² aufweist.

6. Verfahren nach einem der vorhergehenden Ansprüche, wobei der Rasenboden (20) mit dem Vlies (10) derart abgedeckt wird, dass das Vlies (10) vollflächig im Wesentlich bündig auf dem Rasenboden (20) aufliegt.

7. Verfahren nach einem der vorhergehenden Ansprüche, wobei das Vlies (10) an vorbestimmten Stellen mit Befestigungsmittel (60) im Rasenboden (20) verankert wird.

8. Verfahren nach Anspruch 7, wobei die Befestigungsmittel (60) verrottbar bzw. biologisch abbaubar sind.

9. Vlies (10), insbesondere zur Verwendung in einem Verfahren nach einem der vorhergehenden Ansprüche, welches im Wesentlichen flächig ausgestaltet ist und im Wesentlichen Naturfasern aufweist.

10. Vlies nach Anspruch 9, wobei die Naturfasern Schafwolle umfassen.

11. Vlies nach Anspruch 9 oder 10, wobei in das Vlies (10) ein Düngemittel (70), vorzugsweise ein Rasen-Langzeitdünger eingearbeitet ist.

12. Vlies nach einem der Ansprüche 9 bis 11, wobei in das Vlies (10) eine Armierung, vorzugsweise aus Jutefasern eingearbeitet ist.

13. Vlies nach einem der Ansprüche 9 bis 12, wobei das Vlies (10) ein Gewicht zwischen 10 g/m² und 250 g/m², vorzugsweise zwischen 50 g/m² und 75 g/m² aufweist.

14. Vlies nach einem der Ansprüche 9 bis 13, wobei das Vlies (10) zumindest teilweise lichtdurchlässig ausgestaltet ist.

15. Vlies nach einem der Ansprüche 9 bis 14, wobei das Vlies (10) eine Dicke zwischen 0,5 cm und 10 cm, vorzugsweise zwischen 2 cm und 5 cm aufweist.
